# EUROPÄISCHE PATENTSCHRIFT

(11) **EP 2 434 264 B1**
(45) Veröffentlichungstag und Bekanntmachung des Hinweises auf die Patenterteilung: **02.04.2014**
(21) Anmeldenummer: 10179300.8
(22) Anmeldetag: 24.09.2010
(51) Int. Cl.: G01G 21/24

(54) **Kraftübertragungsvorrichtung mit koppelbarem Kalibriergewicht**
Power transmission device with attachable calibration weight
Dispositif de transmission d'énergie avec un poids de calibrage pouvant être couplé

(43) Veröffentlichungstag der Anmeldung: 28.03.2012
(73) Patentinhaber: Mettler-Toledo AG, 8606 Greifensee (CH)
(72) Erfinder: Burkhard, Hans-Rudolf, 8492 Wila (CH); Schneider, Ferdinand, 8406 Winterthur (CH)

(56) Entgegenhaltungen:
- DE-A1- 10 007 267
- DE-A1- 10 229 016
- US-A- 5 771 986
- US-A- 5 866 854
- US-A1- 2007 034 422

## Beschreibung

Die vorliegende Erfindung bezieht sich auf eine Kraftübertragungsvorrichtung für ein gravimetrisches Messinstrument, wobei die Kraftübertragungsvorrichtung einen Lastaufnahmebereich und einen feststehenden Bereich aufweist. Eine mit dem Lastaufnahmebereich verbundene Waagschale nimmt die zu wägende Last auf, deren auf die Waagschale wirkende Kraft direkt oder mittels eines kraftuntersetzenden Hebelwerks an einen Messaufnehmer übertragen wird. Eine Parallelogrammführung zur vertikalen Führung der Waagschale und des Lastaufnahmebereichs, die Kraftübertragungsvorrichtung und der Messaufnehmer bilden im Wesentlichen eine Wägezelle eines gravimetrischen Messinstruments.

Es sind im Stand der Technik verschiedene Funktionsprinzipien von Wägezellen bekannt, wie beispielsweise Wägezellen mit Dehnungsmessstreifen, Wägezellen mit Saiten- oder EMFC-Wägezellen (Electro Magnetic Force Compensation). Gravimetrische Messinstrumente mit Saiten- oder EMFC-Wägezellen liefern Messresultate mit einer sehr hohen Auflösung.

Bei EMFC-Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Saiten-Wägezellen entspricht der mechanische Aufbau weitgehend den EMFC-Wägezellen, mit dem Unterschied, dass anstelle eines elektromagnetischen Messwertaufnehmers ein Schwingsaiten-Messwertaufnehmer eingesetzt wird. Durch die Last wird eine schwingende Saite gespannt, deren Frequenzänderung wiederum ein Mass für die aufgelegte Last darstellt. Während zum Zeitpunkt der Messwerterfassung das mechanische System der EMFC-Wägezellen in der Gleichgewichtslage ähnlich einer mechanischen Balkenwaage mit Gegengewichten ist, weist der Lastaufnahmebereich einer Saiten-Wägezelle eine geringe vertikale Verschiebung zum feststehenden Bereich auf, da die Saite unter Last gespannt wird und sich leicht dehnt. Daher werden Saiten-Wägezellen auch als "wegarme Kraftmesszellen" bezeichnet.

Beide Wägezellentypen werden beispielsweise in Präzisionswaagen und Analysewaagen im Milligramm-Bereich oder in Mikrowaagen im Mikrogramm-Bereich eingesetzt und bedürfen einer periodischen Kalibrierung, damit sie den Herstellerangaben und den gesetzlichen Vorschriften entsprechend Messwerte innerhalb eines vorgeschriebenen Toleranzbereichs liefern. Mit diesen periodischen Kalibrierungen werden auf die Wägezelle einwirkende Einflüsse korrigiert, beispielsweise eine sich verändernde Umgebungstemperatur oder der sich verändernde Luftdruck.

Die Kalibrierung erfolgt durch periodisches Belasten des Lastaufnahmebereichs mit einem bekannten Gewicht. Aus der Differenz des vor Auslieferung der Wägezelle bei der Endkontrolle ermittelten Werts und dem aktuell gemessenen Wert kann ein Korrekturwert errechnet werden, mittels dem die nachfolgenden Messresultate der Wägezelle korrigiert werden können. Um einen möglichst genauen Kalibrierwert zu erhalten, sollte das Kalibriergewicht der maximal zulässigen Last der Wägezelle entsprechen. Dies kann bedeuten, dass sehr grosse Kalibriergewichte erforderlich sind.

Im Stand der Technik sind verschiedene gravimetrische Messinstrumente bekannt, die ein integriertes Kalibriergewicht aufweisen.

Ein solches nach dem Prinzip der elektromagnetischen Kraftkompensation arbeitendes gravimetrisches Messinstrument mit eingebautem, stabförmigem Kalibriergewicht wird in der EP 0 955 530 B1 offenbart. Das stabförmige Kalibriergewicht wird auf einen mit dem Lastaufnahmebereich gekoppelten Kalibriergewichtsarm aufgelegt, welcher als Übersetzungshebel dient. Dank dieser Übersetzung können die Masse des Kalibriergewichts und damit seine Dimensionen klein gehalten werden. Da der Kalibriergewichtsarm stets mit dem Lastaufnahmebereich gekoppelt ist, dient er lediglich als Übersetzung und Aufnahme für das Kalibriergewicht während des Kalibriervorganges und ist nicht Teil des Kalibriergewichts selbst. Der Kalibriergewichtsarm ist folglich Teil einer Kraftübertragungsvorrichtung beziehungsweise eines Hebelwerks zur Übertragung und Untersetzung der Last auf den Messaufnehmer und ist auch während des Wägebetriebs mit dem Lastaufnahmebereich verbunden.

Wie in der CH 661 121 A5 offenbart, kann die Kraftübertragungsvorrichtung auch ein mehrstufiges Hebelwerk aufweisen, wobei die einzelnen Hebel mittels Koppelelementen in geeigneter Weise miteinander verbunden sind, so dass zwischen dem Lastaufnahmebereich und dem Messaufnehmer eine Kraftuntersetzung erreicht wird. An einem der Koppelelemente sind geeignete Aufnahmen zum Auflegen eines Kalibriergewichts ausgebildet.

Die JP 3761792 B2 offenbart eine mit Dehnmessstreifen bestückte Wägezelle, die ein Kalibriergewicht mit einem Übersetzungshebel aufweist. Zwischen dem Übersetzungshebel und dem Lastaufnahmebereich ist ein Koppelelement angeordnet. Durch Anheben des Kalibriergewichts und des Koppelelements wird eine am Koppelelement ausgebildete Lagerpfanne von einem am Lastaufnahmebereich angeordneten Schneidlager abgehoben und dadurch der Übersetzungshebel vom Lastaufnahmebereich entkoppelt.

Alle vorangehend dargestellten Lösungen des Standes der Technik verfügen über eine Kalibriergewichtsauflegevorrichtung wie sie dem Fachmann bekannt sind.

Die präzise Ermittlung des Korrekturwertes hängt nicht nur vom Auflösungsvermögen des Messaufnehmers ab, sondern auch wesentlich von der präzisen Einhaltung der geometrischen Verhältnisse. Bereits kleinste Abweichungen des aufgelegten Kalibriergewichts von dessen Sollposition auf z. B dem in der EP 0 955 530 B1 beschriebenen Kalibriergewichtsarm, dem in der CH 661 121 A5 beschriebenen Koppelglied oder geringste Verschiebungen der Lage der Pfanne zum Schneidlager in der JP3761792 B2 führen zu einer Verlängerung oder Verkürzung des wirksamen Hebelarms und damit zu einem fehlerbehafteten Korrekturwert. Infolge dessen werden die Berührungsstellen zwischen Kalibriergewicht und Kalibriergewichtsarm oder Schneidlager und Pfanne mit grösster Präzision und mit hoher Kostenfolge gefertigt.

Die Aufgabe der vorliegenden Erfindung besteht in der Schaffung einer Kraftübertragungsvorrichtung für ein gravimetrisches Messinstrument mit einem Messaufnehmer, mit welcher ein Kalibriergewicht derart in Anlage bringbar ist, dass der Einfluss sich ändernder geometrischer Verhältnisse auf die am Messaufnehmer wirkende Kalibriergewichtskraft minimiert wird.

Diese Aufgabe wird durch die erfindungsgemässe Kraftübertragungsvorrichtung mit einem Kalibriergewichtshebel sowie durch ein gravimetrisches Messinstrument mit der erfindungsgemässen Kraftübertragungsvorrichtung gelöst.

Eine Kraftübertragungsvorrichtung eines gravimetrischen Messinstruments weist einen feststehenden Bereich und einen Lastaufnahmebereich auf. Der Lastaufnahmebereich ist direkt oder durch mindestens ein Koppelelement und mindestens einen Hebel kraftübertragend mit einem am feststehenden Bereich angeordneten Messaufnehmer verbunden. Ferner weist die erfindungsgemässe Kraftübertragungsvorrichtung ein parallelgeführtes Koppelmittel und einen Kalibrierungshebel auf, dessen Gelenkstelle am feststehenden Bereich abgestützt ist. Der Kalibrierungshebel beinhaltet einen ersten und einen zweiten Kalibrierungshebelarm, wobei zwischen dem zweiten Kalibrierungshebelarm des Kalibrierungshebels und dem mindestens einen Koppelelement oder einem Hebelarm des mindestens einen Hebels das parallelgeführte Koppelmittel angeordnet ist. Das parallelgeführte Koppelmittel ist in ein festes Teilkoppelmittel und in ein parallelgeführtes Teilkoppelmittel zweigeteilt, welche derart zueinander ausgerichtet sind, dass zwischen ihnen nur eine Druck- oder Zugkraft übertragbar ist. Das parallelgeführte Teilkoppelmittel umfasst ein erstes und ein zweites Parallelelement, welche parallel zueinander angeordnet sind und über die das parallelgeführte Teilkoppelmittel entweder am zweiten Kalibrierungsarm oder am Lastaufnahmebereich, am Koppelelement oder am Hebelarm festgelegt ist, so dass bei der Kraftübertragung durch das parallelgeführte Koppelmittel auftretende relative Querbewegungen durch das erste und zweite Parallelelement ausgeglichen werden.

Das Kalibriergewicht kann somit mittels des parallelgeführten Koppelmittels in die Kraftübertragungsvorrichtung eingekoppelt werden, so dass diese kalibriert werden kann. Bei der Einkopplung des Kalibriergewichts können aufgrund unterschiedlicher Schwenkradien zwischen dem Ankopplungspunkt des Kalibriergewichts und dem Abstand zu den nächsten Lagerstellen Querverschiebungen auftreten, welche insbesondere durch das parallelgeführte Koppelmittel und genauer das parallelgeführte Teilkoppelmittel ausgeglichen werden können.

Das parallelgeführte Koppelmittel ist dabei so ausgestaltet, dass zwischen dem festen und dem parallelgeführten Teilkoppelmittel nur Druck- oder Zugkräfte in Richtung der Mittelängsachse des parallelgeführten Koppelmittels übertragen werden können.

Die zweigeteilte Ausgestaltung des parallelgeführten Koppelmittels ermöglicht es, den Kalibrierungshebel und das mit diesem fest verbundene Kalibriergewicht mit dem Lastaufnahmebereich, einem Koppelelement oder einem Hebelarm der Kraftübertragungsvorrichtung kraftübertragend zu koppeln oder vollständig zu entkoppeln. Der Kopplungs- oder Entkopplungsvorgang kann mittels der weiter oben erwähnten Kalibriergewichtsauflegevorrichtung durch Anheben oder Absenken des Kalibriergewichts erfolgen. Das parallelgeführte Koppelmittel dient somit insbesondere zur Übertragung der Kalibriergewichtskraft durch Zug oder Druck. Bei Belastungen in der Gegenrichtung lösen sich die beiden Teilkoppelmittel voneinander, wodurch keine Kraftübertragung mehr zwischen diesen möglich ist. Je nach konkreter Ausgestaltung der beiden Teilkoppelmittel kann dieses Lösen auch nur für eine bestimmte Verschiebestrecke des einen Teilkoppelmittels relativ zum anderen Teilkoppelmittel gelten, wobei im Sinne der Erfindung nur diese bestimmte Verschiebestrecke zu betrachten ist. Im entkoppelten Zustand berühren sich die beiden Teilkoppelmittel nicht und somit kann keine Kraft zwischen den beiden Teilkoppelmitteln übertragen werden.

Zudem sind die beiden Parallelelemente des parallelgeführten Teilkoppelmittels derart ausgestaltet, dass sie einerseits möglichst flexibel und dadurch bei deren Auslenkung geringe Biegemomente verursachend und andererseits stabil genug ausgestaltet sind, dass ihre Labilität nicht dazu führt, dass die Teilkoppelmittel infolge der Schwerkraft oder durch Trägheits- und Beschleunigungskräfte während des Betriebs der Kraftübertragungsvorrichtung auslenken. Die beiden Parallelelemente sind parallel zueinander und zur Richtung der durch das parallelgeführte Koppelmittel übertragbaren Kraft ausgerichtet. Die beiden Parallelelemente dienen dazu, auch geringe relative Querverschiebungen bei der Einkopplung des Kalibriergewichts auszugleichen, welche bei der Kraftübertragung beziehungsweise der Ermittlung des Kalibriermesswerts auftreten können.

Im Unterschied zum Stand der Technik erfolgt die Kraftübertragung nicht über die Auflagestellen des Kalibriergewichts, sondern über das parallelgeführte Koppelmittel beziehungsweise über dessen Parallelelemente. Demzufolge bleiben die geometrischen Verhältnisse stets gleich, da kleinste Verschiebungen, insbesondere relative Querverschiebungen zwischen dem festen und dem parallelgeführten Teilkoppelmittel durch das parallelgeführte Teilkoppelmittel ausgeglichen werden und nicht in den eigentlichen Krafteinleitungspunkten erfolgen, welche durch die unveränderbare Lage der beiden Teilkoppelmittel und der beiden Parallelelemente definiert sind. Da bei Wägezellen mit elektromagnetischer Kraftkompensation die Erfassung der Messwerte im ausbalancierten Zustand erfolgt, sind die Biegemomente in den Lagerstellen der Kraftübertragungsvorrichtung annähernd Null. Der Kalibrierungshebel beziehungsweise dessen Gelenkstelle ist vorzugsweise entsprechend ausgestaltet, so dass während des Kalibrierungsvorganges das Schwenklager biegemomentfrei ist. Näherungsweise gelten die vorangehenden Ausführungen auch für Saiten-Wägezellen, da bei Belastung des Lastaufnahmebereichs nur eine geringe Streckung der Saite und daher nur geringe Biegemomente in den Lagerstellen der Kraftübertragungsvorrichtung vorhanden sind.

In einer Ausführung weist das feste Teilkoppelmittel und das parallelgeführte Teilkoppelmittel zur Übertragung von Druckkräften jeweils mindestens eine Berührungsstelle auf, die gegeneinander ausgerichtet sind. Die Berührungsstellen zur Kraftübertragung können so ausgebildet sein, dass das feste und das parallelgeführte Teilkoppelmittel beim Kalibriervorgang zueinander zentriert werden.

Zur Übertragung von Zugkräften kann eines der beiden Teilkoppelmittel ein erstes Zugelement, z.B. mit einem Vorsprung, aufweisen und das andere Teilkoppelmittel ein zweites Zugelement, z.B. mit einer Pfanne, aufweisen, wobei das erste Zugelement und das zweite Zugelement ineinander greifen, der Vorsprung zur Pfanne ausgerichtet ist und bei Übertragung von Zugkräften der Vorsprung mit der Pfanne in Anlage ist.

In einer weiteren Ausgestaltung kann das erste Zugelement zumindest teilweise innerhalb des das zweite Zugelement aufweisenden Teilkoppelmittels angeordnet sein. Das erste Zugelement kann somit zumindest teilweise innerhalb des Teilkoppelmittels angeordnet sein, welches das zweite Zugelement aufweist oder in dieses hineingreift.

In einer weiteren Ausgestaltung weisen das erste und das zweite Parallelelement Dünnstellenbiegelager auf, welche aufgrund ihrer gattungsgemässen Eigenschaften, insbesondere der Druck- oder Zugkraft-Übertragung entlang ihrer Mittellängsachse, ihrer Federwirkung sowie ihrer Biegeeigenschaften, besonders für den Einsatz in einem erfindungemässen parallelgeführten Koppelmittel geeignet sind.

Die Kraftübertragungsvorrichtung kann auch eine Parallelführung beinhalten, so dass in deren Betriebsstellung der Lastaufnahmebereich mittels mindestens eines oberen Parallellenkers und mittels mindestens eines unteren Parallellenkers am feststehenden Bereich in vertikaler Richtung geführt ist.

Die Kraftübertragungsvorrichtung kann aus verschiedenen Einzelteilen bestehen, welche mittels Verbindungselementen zu einer Einheit zusammengefügt sind. Mehrere dieser Teile können aber auch stoffschlüssig miteinander verbunden sein. Vorzugsweise sind mindestens der Lastaufnahmebereich, der feststehende Bereich, der Kalibrierungshebel und das parallelgeführte Koppelmittel monolithisch miteinander verbunden.

Wie bereits weiter oben erwähnt, kann die erfindungsgemässe
Kraftübertragungsvorrichtung zusammen mit einem Messaufnehmer und mit einem Kalibriergewicht als Wägezelle in einem gravimetrischen Messinstrument eingesetzt werden. Ein gravimetrisches Messinstrument wird üblicherweise derart kalibriert, dass die Gewichtskraft des Kalibriergewichts durch die Kraftübertragungsvorrichtung in derselben Richtung wie eine auf den Lastaufnahmebereich wirkende Kraft auf den Messaufnehmer übertragbar ist. Folglich wird der Messaufnehmer in gleicher Weise mit einer Kalibrierkraft belastet wie im normalen Betrieb mit einer zu wiegenden Last. Bei Saiten-Wägezellen kann der Messaufnehmer meistens nur in der Lastrichtung belastet werden, weshalb die vorangehend beschriebene Ausführung für Saiten- und für EMFC-Wägezellen geeignet ist.

Es ist aber auch möglich, dass die Gewichtskraft des Kalibriergewichts durch die Kraftübertragungsvorrichtung in der entgegengesetzten Richtung wie eine auf den Lastaufnahmebereich wirkende Kraft auf den Messaufnehmer übertragbar ist. Diese Ausführung ist insbesondere für EMFC-Wägezellen geeignet, die über einen Messaufnehmer mit Push-Pull System verfügen, wie dies in der US 20080218303 A1 ausführlich beschrieben ist. Aufgrund dieser Ausgestaltung kann das Kalibriergewicht als Kompensationsgewicht eingesetzt werden, um den Lastbereich der Wägezelle zu vergrössern. Eine derart ausgebildete Wägezelle könnte bei entkoppeltem Kalibriergewicht beispielsweise Lasten im Bereich von 0-100 Gramm wiegen und mit eingekoppeltem Kalibriergewicht den Wägebereich erweitern und Lasten im Bereich von 100-200 Gramm wiegen, da die Gewichtskraft des Kalibriergewichts der auf den Lastaufnahmebereich wirkenden Last entgegenwirkt.

Üblicherweise ist das Kalibriergewicht aus einem korrosionsbeständigen Material mit einheitlicher Dichte p = 8.0 kg / dm³ gefertigt. Das Kalibriergewicht kann aber auch teilweise aus demselben Material wie die Kraftübertragungsvorrichtung gefertigt sein und mit einer Ergänzungsmasse höherer Dichte versehen sein. Um die Genauigkeit des Kalibrierwerts zu erhöhen, kann ferner ein Drucksensor zur Erfassung des Umgebungsdrucks des gravimetrischen Messinstruments vorhanden sein. Dessen Messwert kann zur Korrektur des Auftriebs des Kalibriergewichts herangezogen werden, da die Auftriebskraft der vom Kalibriergewicht verdrängten Luft der Gewichtskraft des Kalibriergewichts entgegenwirkt.

### Verschiedene Ausführungsvarianten der erfindungsgemässen

Kraftübertragungsvorrichtung und deren Verwendung in einem gravimetrischen Messinstrument werden anhand der folgenden Figuren näher beschrieben, wobei gleiche Elemente mit denselben Bezugszeichen versehen sind. Es zeigen:
- Figur 1: eine schematische Darstellung einer Wägezelle mit einer Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem parallelgeführten Koppelmittel zwischen dem Hebelwerk und dem Kalibrierungshebel, welches nur Druckkräfte übertragen kann;
- Figur 2: eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem parallelgeführten Koppelmittel zwischen dem Hebelwerk und dem Kalibrierungshebel, welches nur Zugkräfte übertragen kann;
- Figur 3: eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk zur Untersetzung der auf den Lastaufnahmebereich wirkenden Kraft aufweist und mit einem parallelgeführten Koppelmittel zwischen dem Lastaufnahmebereich und dem Kalibrierungshebel, welches nur Zugkräfte übertragen kann;
- Figur 4: eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk mit zwei Hebeln zur Untersetzung der auf den Lastaufnahmebereich wirkenden Kraft aufweist und mit einem parallelgeführten Koppelmittel zwischen einem zweiten Koppelelement der beiden Hebel und dem Kalibrierungshebel, welches nur Druckkräfte übertragen kann;
- Figur 5: eine schematische Darstellung einer Wägezelle mit einer weiteren Ausführung der Kraftübertragungsvorrichtung in der Aufsicht, welche ein zwischen dem Lastaufnahmebereich und dem Messaufnehmer angeordnetes Hebelwerk mit drei Hebeln zur Untersetzung der auf den Lastaufnahmebereich wirkenden Kraft aufweist und mit einem parallelgeführten Koppelmittel zwischen dem Hebelwerk und dem Kalibrierungshebel, welches nur Zugkräfte übertragen kann;
- Figur 6: die Darstellung einer monolithisch ausgebildeten Kraftübertragungsvorrichtung in der Aufsicht, bei welcher mittels dünner Schnittlinien ein Hebelwerk, ein Spulenhebel, ein Kalibrierungshebel und die Hebel verbindenden Koppelelemente sowie eine Parallelführung herausgearbeitet sind, wobei ein zwischen dem Hebelwerk und dem Kalibrierungshebel angeordnetes parallelgeführtes Koppelmittel ein parallelgeführtes Teilkoppelmittel und ein festes Teilkoppelmittel aufweist;
- Figur 7: eine Ausgestaltung eines parallelgeführten Koppelmittels, mit welchem nur eine Druckkraft übertragbar ist;
- Figur 8: eine Ausgestaltung eines parallelgeführten Koppelmittels, mit welchem nur eine Zugkraft übertragbar ist;
- Figur 9: eine weitere Ausgestaltung eines parallelgeführten Koppelmittels, mit welchem nur eine Zugkraft übertragbar ist;
- Figur 10: eine weitere Ausgestaltung eines parallelgeführten Koppelmittels, mit welchem nur eine Zugkraft übertragbar ist;
- Figur 11: eine weitere Ausgestaltung eines parallelgeführten Koppelmittels, mit welchem nur eine Zugkraft übertragbar ist;
- Figur 12: eine weitere Ausgestaltung eines parallelgeführten Koppelmittels, mit welchem nur eine Druckkraft übertragbar ist.

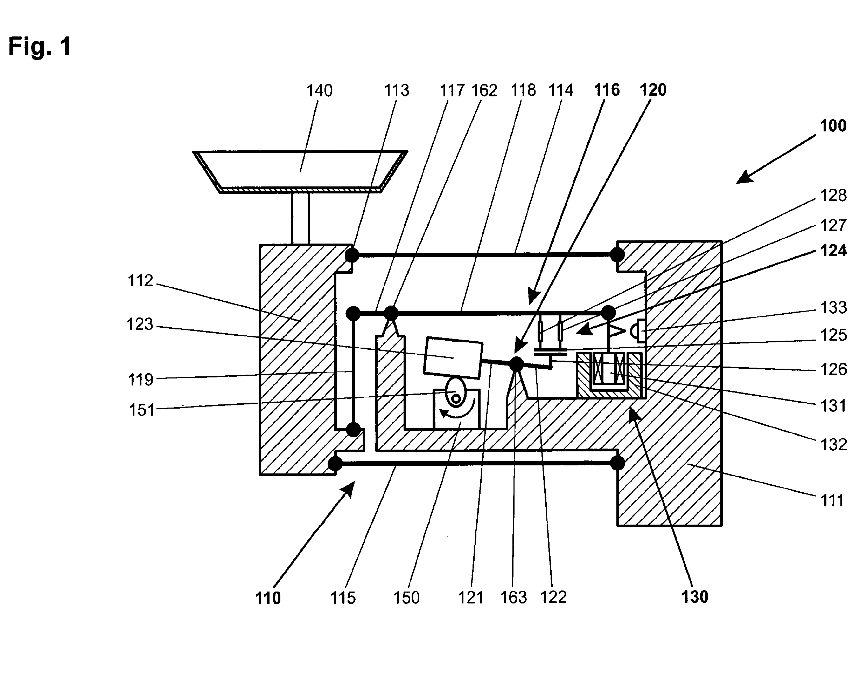

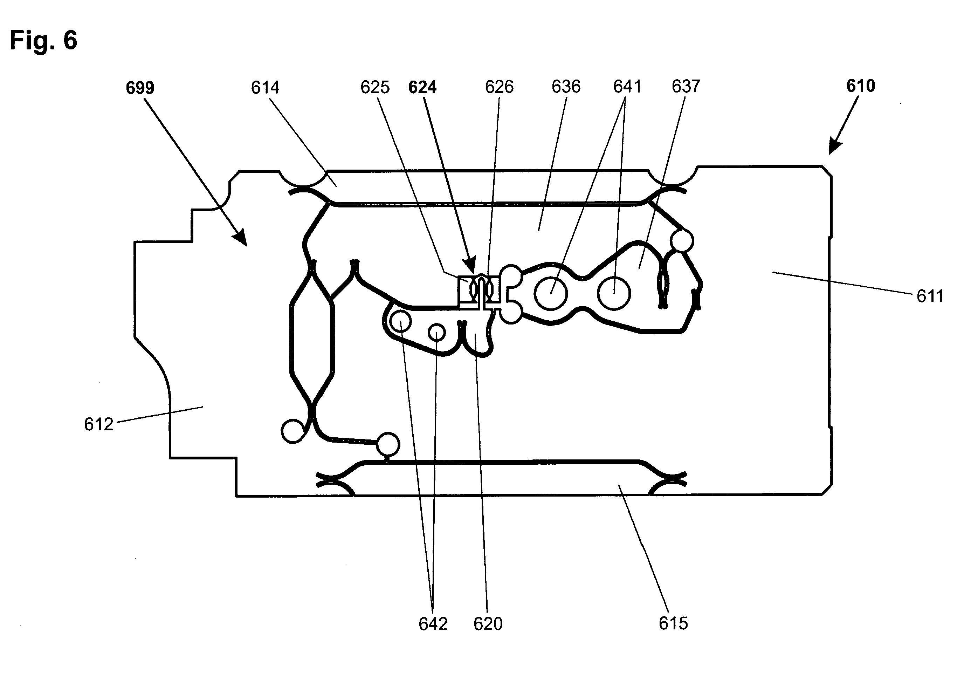

Die Figur 1 zeigt in der Aufsicht eine schematische Darstellung einer Wägezelle 100 mit einer Ausführung der Kraftübertragungsvorrichtung 110. Die
Kraftübertragungsvorrichtung 110 weist einen feststehenden Bereich 111 und einen Lastaufnahmebereich 112 auf. Der Lastaufnahmebereich 112 ist mittels eines ersten Parallellenkers 114 und mittels eines zweiten Parallellenkers 115 am feststehenden Bereich 111 parallel geführt. Alle Gelenkstellen 113 der Kraftübertragungsvorrichtung 110 sind als dicke Punkte dargestellt und können jede, im Stand der Technik bekannte Ausgestaltung aufweisen. Üblicherweise werden diese Gelenkstellen 113 als Dünnstellenbiegelager ausgestaltet, wie sie in den Figuren 6 bis 12 dargestellt sind.

Mit dem Lastaufnahmebereich 112 ist ein als Waagschale ausgebildeter Lastaufnehmer 140 verbunden. Ferner ist am feststehenden Bereich 111 ein Messaufnehmer 130 festgelegt, durch welchen ein kraftabhängiges Wägesignal erzeugt werden kann. Der dargestellte Messaufnehmer 130 weist eine Spule 131 und einen Magneten 132 sowie einen Positionsgeber 133 auf. Der Magnet 132 ist mit dem feststehenden Bereich 111 fest verbunden und die zu messende Kraft greift an der Spule 131 an, welche berührungsfrei innerhalb des Magneten 132 angeordnet ist. Durch die an der Spule 131 angreifende Kraft wird diese relativ zum Magneten 132 verschoben und diese Verschiebung durch den Positionsgeber 133 detektiert. Das vom Positionsgeber 133 abgegebene Signal wird an eine nicht dargestellte Waagenelektronik weitergeleitet, welche einen die Spule 131 durchfliessenden Strom kontinuierlich regelt, um die ursprüngliche Position der Spule 131 zum Magneten 132 trotz der einwirkenden Kraft wiederherzustellen. Der die Spule 131 durchfliessende Strom wird gemessen, diese Rohmesssignale in der Waagenelektronik zu einem Messwert verarbeitet und dieser Messwert an eine ebenfalls nicht dargestellte Anzeige weitergeleitet und dort zur Anzeige gebracht. Selbstverständlich können an Stelle des dargestellten Messaufnehmers 130 auch andere Messaufnehmer, beispielsweise Schwingsaiten, induktive und kapazitive Messaufnehmer, mit Dehnungsmessstreifen versehene Messaufnehmer und dergleichen mehr eingesetzt werden.

Da der dargestellte Messaufnehmer 130 nur eine begrenzte Kompensationskraft zur Kompensation der auf den Lastaufnahmebereich 140 wirkenden Kraft aufbringen kann, wird häufig ein einstufiges oder mehrstufiges Hebelwerk zur Untersetzung der zu messenden Kraft eingesetzt. Dieses ist zwischen dem Lastaufnahmebereich 112 und dem Messaufnehmer 130 kraftübertragend angeordnet. Das dargestellte Hebelwerk weist einen am feststehenden Bereich 111 schwenkbar gelagerten Hebel 116 auf, dessen kurzer Hebelarm 117 durch ein erstes Koppelelement 119 mit dem Lastaufnahmebereich 112 verbunden ist. Der lange Hebelarm 118 des Hebels 116 ist mit der Spule 131 verbunden.

Die Kraftübertragungsvorrichtung 110 weist zudem einen Kalibrierungshebel 120 auf, welcher ebenfalls am feststehenden Bereich 111 schwenkbar gelagert ist und dessen erster Kalibrierungshebelarm 121 mit einem Kalibriergewicht 123 fest verbunden ist. Zur Übertragung der Gewichtskraft des Kalibriergewichts 123 dient ein parallelgeführtes Koppelmittel 124, dessen parallelgeführtes Teilkoppelmittel 125 mittels zweier Parallelelemente 127, 128, welche hier Dünnstellenbiegelager aufweisen, mit dem langen Hebelarm 118 verbunden ist und dessen festes Teilkoppelmittel 126 mit dem zweiten Kalibrierungshebelarm 122 verbunden ist, so dass das parallelgeführte Koppelmittel 124 zwischen dem langen Hebelarm 118 und dem zweiten Kalibrierungshebelarm 122 angeordnet ist. Das erste und das zweite Parallelelement 127, 128 stehen hier beispielhaft für alle möglichen Lagerstellenarten, wie Dünnstellenbiegelager, Blattfedern oder andere dem Fachmann bekannte Ausführungen, welche eine gewisse Eigensteifigkeit aufweisen oder deren Schwenkwinkel begrenzt ist. Diese Eigenschaft der Parallelelemente 127, 128, ist für die hier gezeigte stehende Lagerstelle vorteilhaft, vor allem in der Ausgestaltung als Dünnstellenbiegelager.

Wie in Figur 1 dargestellt, ist am feststehenden Bereich eine Kalibriergewichtsauflegevorrichtung 150 festgelegt die, je nach Stellung ihrer Kurvenscheibe 151 das Kalibriergewicht 123 am feststehenden Bereich 111 abstützt oder freigibt. Im abgestützten Zustand sind das parallelgeführte Teilkoppelmittel 125 und das feste Teilkoppelmittel 126 voneinander getrennt und im freigegebenen Zustand sind die beiden Teilkoppelmittel 125, 126 miteinander in Anlage, wodurch die Gewichtskraft des Kalibriergewichts 123 auf den Hebel 118 und damit auf die Spule 131 des Messaufnehmers 130 übertragen wird. Aus der schematischen Darstellung ist klar ersichtlich, dass mit dem gezeigten parallelgeführten Koppelmittel 124 nur Druckkräfte übertragen werden können, da bei freigegebenem Kalibriergewicht 123 das feste Teilkoppelmittel 126 gegen das parallelgeführte Teilkoppelmittel 125 gedrückt wird und gegen die vom Messaufnehmer 130 erzeugte Reaktionskraft wirkt.

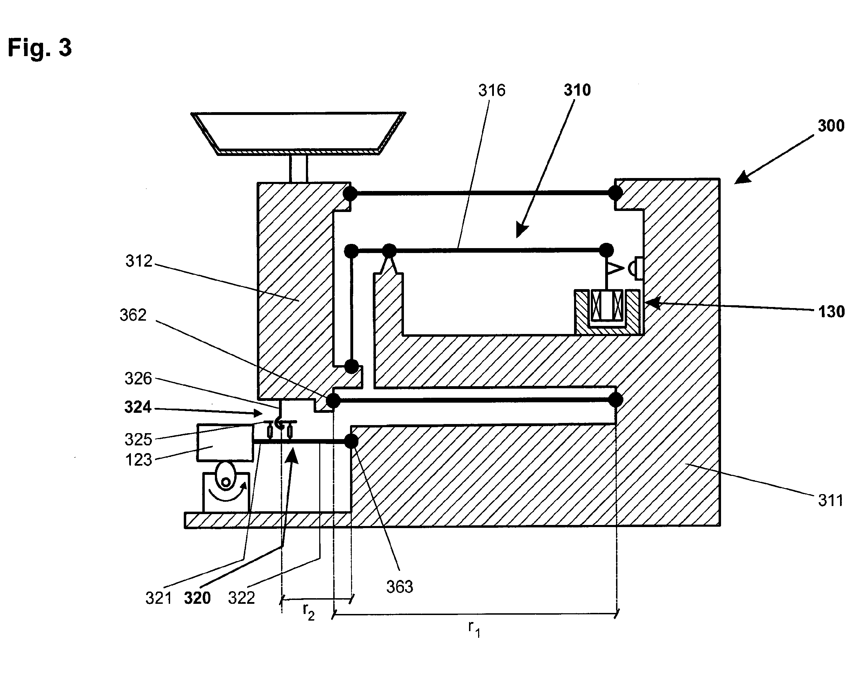

Die parallel angeordneten Parallelelemente 127, 128 des parallelgeführten Teilkoppelmittels 125 sind so ausgebildet, dass sie bei der Kraftübertragung auftretende relative Querverschiebungen ausgleichen können, wie es im Zusammenhang mit Figur 3 näher erläutert ist.

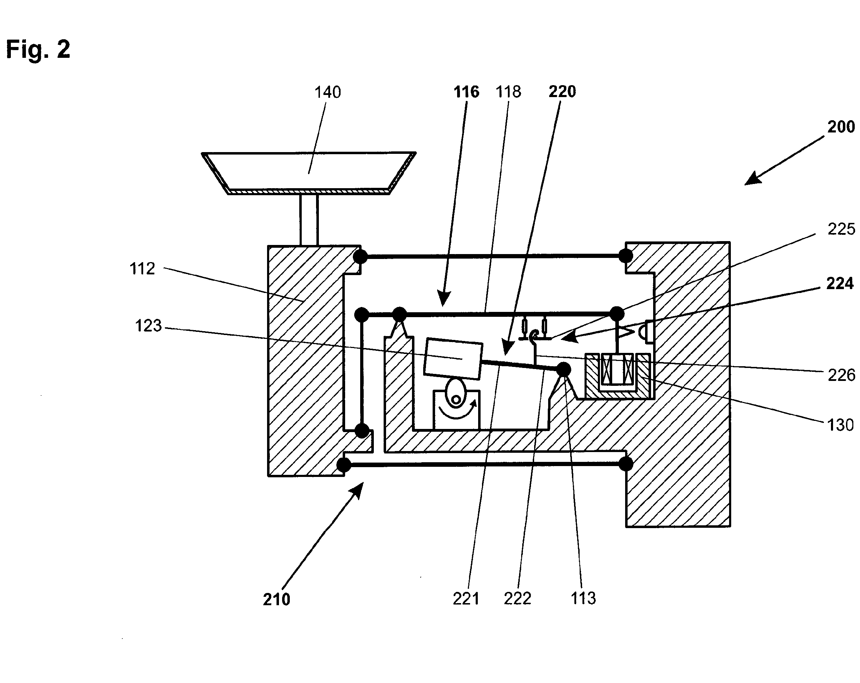

Figur 2 zeigt eine schematische Darstellung einer Wägezelle 200 mit einer weiteren Ausführung der Kraftübertragungsvorrichtung 210 in der Aufsicht. Mit Ausnahme des Kalibrierungshebels 220 und des parallelgeführten Koppelmittels 224, entsprechen alle dargestellten Elemente den Elementen von Figur 1 und werden nachfolgend nicht mehr beschrieben.

Auch der in Figur 2 dargestellte Kalibrierungshebel 220 weist einen ersten Kalibrierungshebelarm 221 und einen zweiten Kalibrierungshebelarm 222 auf, wobei sich der erste Kalibrierungshebelarm 221 vom Kalibriergewicht 123 bis zur Gelenkstelle 113 erstreckt und der zweite Kalibrierungshebelarm 222 sich zwischen der Gelenkstelle 113 und dem festen Teilkoppelmittel 226 des parallelgeführten Koppelmittels 224 erstreckt.

Das parallelgeführte Koppelmittel 224 weist ein parallelgeführtes Teilkoppelmittel 225 und ein festes Teilkoppelmittel 226 auf, die im unbelasteten Zustand berührungsfrei ineinander greifen. Sobald durch die Freigabe des Kalibriergewichts 123 eine Zugkraft vom festen Teilkoppelmittel 226 zum parallelgeführten Teilkoppelmittel 225 und damit auf den langen Hebelarm 118 des Hebels 116 übertragen werden soll, verhakt sich nach kurzer relativer Verschiebung der beiden entlang einer definierten Verschiebestrecke das feste Teilkoppelmittel 226 im parallelgeführten Teilkoppelmittel 225.

Es ist noch zu erwähnen, dass die auf den langen Hebelarm 118 übertragene Zugkraft des Kalibriergewichts 123 der zu messenden Kraft einer auf den Lastaufnehmer 140 aufgelegten Last entgegenwirkt. Damit kann das Kalibriergewicht 123 auch dazu verwendet werden, den Wägebereich der Wägezelle 200 zu erweitern. Mit einem Kalibriergewicht 123 lässt sich der Wägebereich maximal verdoppeln, wenn die durch das Kalibriergewicht 123 auf den Messaufnehmer 130 wirkende Kraft der maximalen Kraft entspricht. Der Wägebereich ist dann unsichtbar für den Benutzer in zwei Teilbereiche unterteilt, wobei im ersten Teilbereich keine Kraft des Kalibriergewichts 123 auf den Messaufnehmer 130 einwirkt und im zweiten Teilbereich das Kalibriergewicht 123 mit dem Hebelwerk gekoppelt ist. Gegebenenfalls wird infolge des zugeschalteten Kalibriergewichts 123 beziehungsweise den dadurch eingekoppelten Gelenkstellen 113 des Kalibrierungshebels 220 die Genauigkeit der Messwerte geringfügig beeinflusst, weshalb für den höheren Lastbereich eine geringere Auflösung beziehungsweise eine Herabstufung der Genauigkeitsklasse vorgesehen sein kann. Alle vorangehend beschriebenen Vorgänge können mittels der Waagenelektronik lastabhängig automatisch gesteuert werden, ohne dass sich der Benutzer darum kümmern muss, welcher Teilbereich zu wählen ist.

Selbstverständlich kann das Kalibriergewicht 123 auch direkter auf den Lastaufnahmebereich 112 einwirken, wie dies in der Figur 3 dargestellt ist. Diese zeigt eine Wägezelle 300 mit einer weiteren Ausführung der Kraftübertragungsvorrichtung 310 in der Aufsicht. Mit Ausnahme des Kalibrierungshebels 320 und des parallelgeführten Koppelmittels 324, entsprechen alle dargestellten Elemente den Elementen von Figur 1 und werden nachfolgend nicht mehr beschrieben. Das Hebelwerk weist einen Hebel 316 auf, welcher zwischen dem Lastaufnahmebereich 112 und dem Messaufnehmer 130 angeordnet ist. Der Kalibrierungshebel 320 mit einem Kalibriergewicht 123 ist mit dem feststehenden Bereich 311 gelenkig verbunden und bezogen auf die Gebrauchslage der Wägezelle 300 unterhalb des Lastaufnahmebereichs 312 angeordnet. Die Kraftübertragung vom Kalibrierungshebel 320 zum Lastaufnahmebereich 312 erfolgt über das Zugkräfte übertragende parallelgeführte Koppelmittel 324. Das parallelgeführte Teilkoppelmittel 325 ist hier mit dem Kalibrierungshebel 320 verbunden und das feste Teilkoppelmittel 326 mit dem Lastaufnahmebereich 312. Je kürzer der zweite Hebelarm 322 des Kalibrierungshebels 320 im Verhältnis zum ersten Kalibrierungshebelarm 321 gewählt ist, desto grösser ist die durch das parallelgeführte Koppelmittel 324 übertragene Kalibrierkraft auf den Lastaufnahmebereich 312.

Das parallelgeführte Koppelmittel 324 dient dazu Querkräfte auszugleichen, welche bei einer Auslenkung der Teilkoppelmittel ohne Parallelführung auftreten würden, da es dann aufgrund einer horizontalen Verschiebung zu einer gegenseitigen Verspannung der Lagerstellen 362 und 363 wegen unterschiedlicher Schwenkradien r₁, r₂ kommen kann. Diese Querkräfte werden durch das parallelgeführte Koppelmittel 324 und insbesondere durch das parallelgeführte Teilkoppelmittel 325 ausgeglichen.

Selbstverständlich könnte das in Figur 3 gezeigte Ausführungsbeispiel auch in einem Direktmesssystem eingesetzt werden, wie es beispielsweise in der CH 593 481 A5 oder EP 1 726 926 A1 offenbart wird. In diesem Fall würde das Kalibriergewicht 123 über das parallelgeführte Koppelmittel 324 direkt und nicht über ein Parallelogramm bzw. ein Hebelwerk in das Messsystem eingekoppelt werden, wie es hier durch die Anordnung des festen Teilkoppelmittels 326 am Lastaufnahmebereich 312 angedeutet ist.

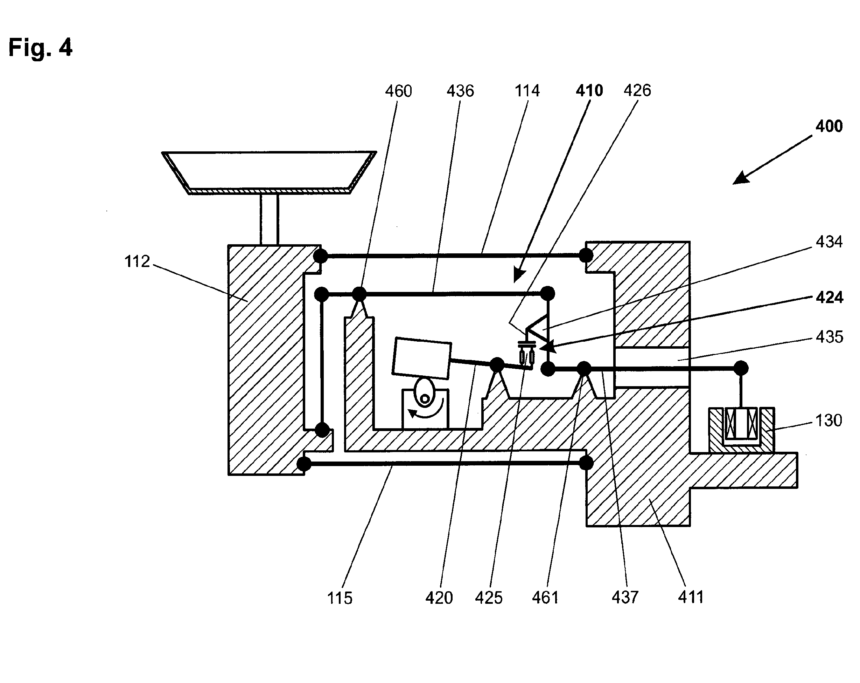

Figur 4 zeigt in schematischer Darstellung eine Wägezelle 400 mit einer weiteren Ausführung der Kraftübertragungsvorrichtung 410 in der Aufsicht, welche ein zwischen dem Lastaufnahmebereich 112 und dem Messaufnehmer 130 angeordnetes Hebelwerk mit zwei Hebeln 436, 437 zur Untersetzung der auf den Lastaufnahmebereich 112 wirkenden Kraft aufweist. Auch Figur 4 weist Bauteile auf, die mit einigen Bauteilen in den vorangehenden Figuren identisch sind und deshalb dieselben Bezugszeichen aufweisen oder nicht beschrieben sind. Der erste Hebel 436 ist durch ein Koppelelement 434 kraftübertragend mit dem zweiten Hebel 437 verbunden. Zwischen dem Koppelelement 434 und einem am feststehenden Bereich 411 beweglich gelagerten Kalibrierungshebel 420 ist ein parallelgeführtes Koppelmittel 424 angeordnet, welches nur Druckkräfte übertragen kann. Das feste Teilkoppelmittel 426 des parallelgeführten Koppelmittels 424 ist mit dem Koppelelement 434 verbunden und das parallelgeführte Teilkoppelmittel 425 ist mit dem Kalibrierungshebel 420 verbunden. Die dargestellte Ausführung führt dazu, dass durch den Versatz der Kraftwirkungslinien des Koppelelements 434 und des seitlich damit verbundenen parallelgeführten Koppelmittels 424 ein Drehmoment erzeugt wird, welches die Lagerstellen 460, 461 der Hebel 436, 437 belasten. Vorzugsweise sind deshalb Lösungen anzustreben, bei denen die beiden Kraftwirkungslinien zusammenfallen.

Um den Austausch des Messaufnehmers 130 zu erleichtern, weist der feststehende Bereich 411 einen Durchbruch 435 auf, durch welchen der zweite Hebel 437 hindurchreicht, so dass der Messaufnehmer 130 auf der den Parallellenkern 114, 115 abgewandten Seite des feststehenden Bereichs 411 angeordnet werden kann.

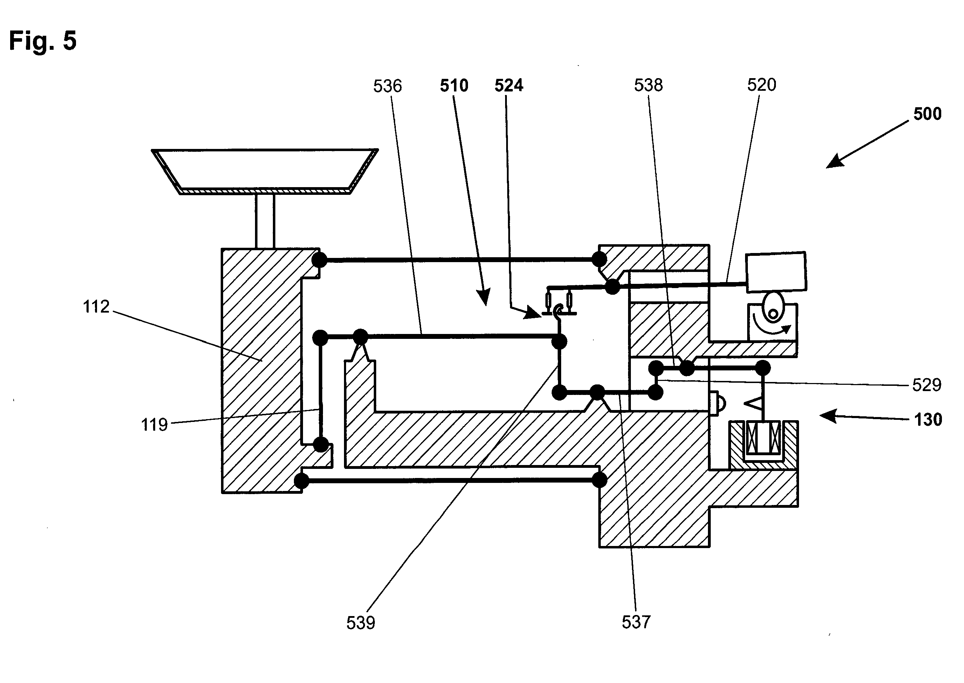

Figur 5 zeigt eine schematische Darstellung einer Wägezelle 500 mit einer weiteren Ausführung der Kraftübertragungsvorrichtung 510 in der Aufsicht. Diese weist ein zwischen dem Lastaufnahmebereich 112 und dem Messaufnehmer 130 angeordnetes Hebelwerk mit drei Hebeln 536, 537, 538 zur Untersetzung der auf den Lastaufnahmebereich 112 wirkenden Kraft auf. Wie bereits in Figur 4 dargestellt und weiter oben beschrieben, sind der erste Hebel 536 mittels eines zweiten Koppelelements 539 mit dem zweiten Hebel 537 und der zweite Hebel 537 mittels eines dritten Koppelelements 529 mit dem dritten Hebel 538 kraftübertragend verbunden. Ein parallelgeführtes Koppelmittel 524, welches nur Zugkräfte übertragen kann, ist zwischen dem Hebelwerk und einem Kalibrierungshebel 520 angeordnet. Die Krafteinleitung erfolgt beim zweiten Koppelelement 539, welches den ersten Hebel 536 mit dem zweiten Hebel 537 verbindet, wobei das parallelgeführte Koppelmittel 524 nicht wie in Figur 4 parallel, sondern in Serie zum zweiten Koppelelement 539 angeordnet ist. Durch die serielle Anordnung wird vermieden, dass während des Kalibrierens ein Drehmoment auf das zweite Koppelelement 539 wirkt, wie dies bei dem in Figur 4 dargestellten Koppelelement 434 sein kann.

In Figur 6 ist eine monolithisch ausgebildete Kraftübertragungsvorrichtung 610 in der Aufsicht dargestellt. Bei einem durch seine Umrisslinien begrenzten Materialblock 699 sind mittels dünner, orthogonal zur Zeichnungsebene den Materialblock 699 durchdringender Schnittlinien ein erster Hebel 636, ein zweiter Hebel 637, ein Kalibrierungshebel 620, ein erster Parallellenker 614 ein zweiter Parallellenker 615, der feststehende Bereich 611 der Lastaufnahmebereich 612 sowie ein erstes Koppelelement und ein zweites Koppelelement ausgebildet. Alle diese mittels Schnittlinien ausgebildeten Teile sind mittels ebenfalls durch Schnittlinien geschaffene Dünnstellenbiegelager miteinander in geeigneter Weise verbunden, so dass die Kraftübertragungsvorrichtung 610 im Wesentlichen einen am feststehenden Bereich 611 geführten Lastaufnahmebereich 612 und ein Hebelwerk 636, 637 sowie einen Kalibrierungshebel 620 aufweist. Der zweite Hebel 637 wird mittels einer nicht dargestellten Hebelarmverlängerung mit dem nicht dargestellten Messaufnehmer verbunden. Zur Befestigung der Hebelarmverlängerung sind im zweiten Hebel 637 zwei Bohrungen 641 vorhanden. Auch der Kalibrierungshebel 620 weist zwei Bohrungen 642 auf, an denen ein Kalibriergewicht befestigt werden kann. Zwischen dem ersten Hebel 636 und dem Kalibrierungshebel 620 ist ein parallelgeführtes Koppelmittel 624 angeordnet, das ein parallelgeführtes Teilkoppelmittel 625 und ein festes Teilkoppelmittel 626 aufweist. Zur Übertragung von Druckkräften ist am parallelgeführten Teilkoppelmittel 625 eine erste Berührungsstelle und am zweiten Teilkoppelmittel 626 eine zweite Berührungsstelle ausgebildet. Die Berührungsstellen können für eine Kraftübertragung miteinander in Kontakt gebracht werden und sind hier im Wesentlichen parallel zueinander ausgerichtet.

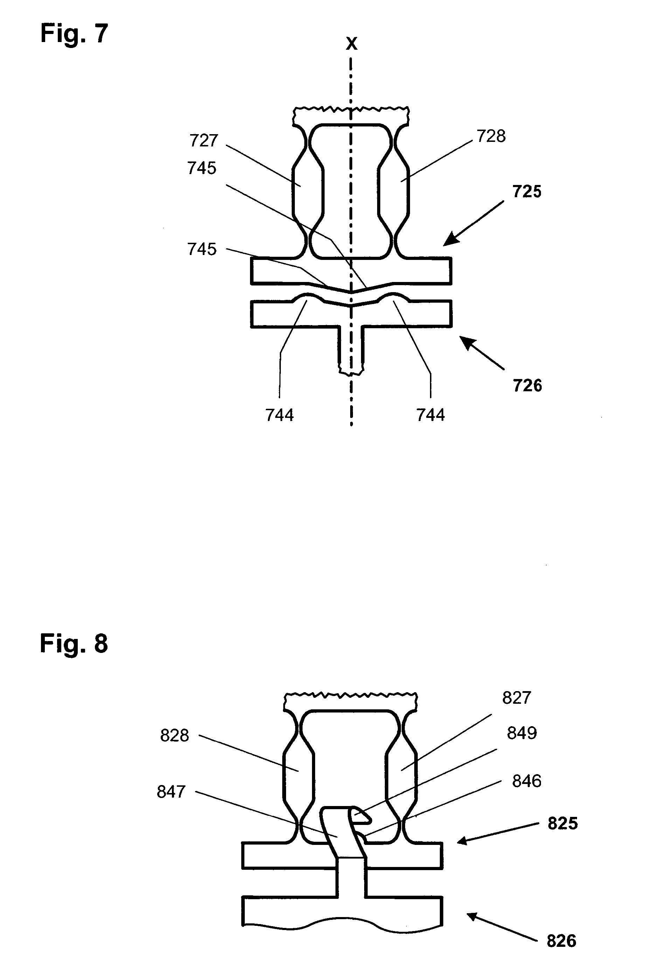

Die Figuren 7 bis 11 zeigen verschiedene Ausführungsformen eines parallelgeführten Koppelmittels, welches wie in den Figuren 1 bis 6 gezeigt in einer Kraftübertragungsvorrichtung einer Wägezelle angeordnet werden kann. Das parallelgeführte Koppelmittel weist ein parallelgeführtes Teilkoppelmittel und ein festes Teilkoppelmittel auf, von denen das eine mit dem Lastaufnahmebereich oder dem Hebelwerk eines Kraftübertragungsvorrichtung und das andere mit dem Kalibrierungshebel verbunden ist.

Figur 7 zeigt eine mögliche Ausgestaltung eines parallelgeführten Koppelmittels, mit welchem nur eine Druckkraft übertragbar ist. Das parallelgeführte Koppelmittel weist ein festes Teilkoppelmittel 726 und ein parallelgeführtes Teilkoppelmittel 725 mit zwei, parallel zueinander angeordneten Parallelelementen 727, 728 auf. Die Parallelelemente 727, 728 sind hier als Lenker mit je zwei Dünnstellenbiegelager ausgestaltet, sie können jedoch auch als beliebige andere, dem Fachmann bekannte Parallelelemente ausgestaltet sein. Sie sind so ausgerichtet, dass sie bei einer Kraftübertragung durch das parallelgeführte Koppelmittel auftretende Querkräfte infolge der geometrischen Verhältnisse ausgleichen können.

Da beim Kalibriervorgang Druckkräfte übertragen werden und ein Ausknicken der beiden Teilkoppelmittel 725, 726 unter Last unbedingt zu vermeiden ist, muss das parallelgeführte Teilkoppelmittel 725 eine innere Stabilität aufweisen. Das feste Teilkoppelmittel 726 weist eine gegen das parallelgeführte Teilkoppelmittel 725 gerichtete Fläche mit zwei daraus hervorragenden Vorsprüngen als erste Berührungsstelle 744 auf, welche in Bezug zur Mittellängsachse zwischen den beiden Parallelelementen 727, 728 spiegelsymmetrisch angeordnet sind. Ferner weist das parallelgeführte Teilkoppelmittel 725 zwei gegen das feste Teilkoppelmittel 726 gerichtete zweite Berührungsstellen 745 auf, auf welchen je eine der beiden Berührungsstellen 744 abstützen kann. Durch diese Ausgestaltung sind in einer Ebene orthogonal zu den Mittellängsachsen X der beiden Parallelelemente 727, 728 Berührungsstellen 744, 745 vorhanden, welche die beiden Teilkoppelmittel 725, 726 bei einer Kalibrierkraftübertragung zueinander zentrieren.

Wie in Figur 7 gezeigt, können mittels dieser Ausgestaltung das parallelgeführte Teilkoppelmittel 725 und das feste Teilkoppelmittel 726 beim Kalibriervorgang zueinander ausgerichtet werden. Dadurch können Verschiebungen orthogonal zu den Mittellängsachsen X der Parallelelemente 727, 728 verhindert werden. Zwecks der Ausrichtungsfunktion sind am parallelgeführten Teilkoppelmittel 725 die beiden zweiten Berührungsstellen 745 in stumpfem Winkel zueinander geneigt ausgebildet.

Die Figuren 8 bis 11 zeigen jeweils weitere Ausgestaltungen des parallelgeführten Koppelmittels zur Übertragung von Zugkräften.

Figur 8 zeigt ein parallelgeführtes Koppelmittel mit einem parallelgeführten Teilkoppelmittel 825, welches zwei Dünnstellenbiegelager aufweisende Parallelelernente 827, 828 aufweist, und mit einem festen Teilkoppelmittel 826.

Die beiden Parallelelemente 827, 828 sind parallel zueinander angeordnet. Zwischen den Parallelelementen 827, 828 ist zudem ein erstes Zugelement 846 ausgebildet. Das feste Teilkoppelmittel 826 weist ein zweites Zugelement 847 auf. Sobald eine Kraft vom festen Teilkoppelmittel 826 zum parallelgeführten Teilkoppelmittel 827 übertragen werden soll, greift nach kleinem relativem Verschiebeweg voneinander das erste Zugelement 846 in das zweite Zugelement 847 ein. Zur noch sichereren Übertragung von Zugkräften kann das erste Zugelement 846, wie hier gezeigt, einen Vorsprung und das zweite Zugelement 847 eine Pfanne 849 aufweisen. Sobald das erste Zugelement 846 und das zweite Zugelement 847 ineinander greifen, ist der Vorsprung zur Pfanne 849 durch ihre Formgebung selbstzentrierend ausgerichtet und der Vorsprung mit der Pfanne 849 in Anlage.

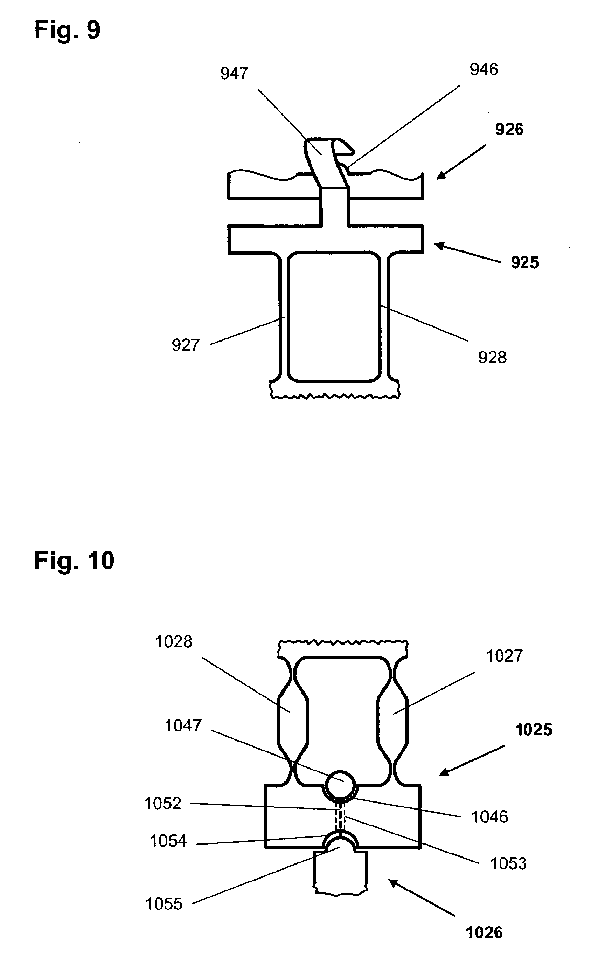

Figur 9 zeigt eine weitere Ausgestaltung des parallelgeführten Koppelmittels aus Figur 8, bei welchem ein parallelgeführtes Teilkoppelmittel 925 ein zweites Zugelement 947 mit einer Pfanne und ein festes Teilkoppelmittel 926 ein erstes Zugelement 946 mit einem Vorsprung aufweist, welche zur Kraftübertragung ineinandergreifen können, wie es bereits im Zusammenhang mit Figur 8 beschrieben wurde. Das parallelgeführte Teilkoppelmittel 925 weist hier als weitere Ausgestaltung zwei als Blattfedern ausgestaltete Parallelelemente 927, 928 auf.

Figur 10 zeigt ein weiteres parallelgeführtes Koppelmittel mit einem parallelgeführten Teilkoppelmittel 1025 und einem festen Teilkoppelmittel 1026. Das parallelgeführte Teilkoppelmittel 1025 weist mittig zwischen den beiden Dünnstellenbiegelager aufweisenden Parallelelementen 1028, 1027 ein als Pfanne wirkendes zweites Zugelement 1046 in Form einer Vertiefung auf. Das feste Teilkoppelmittel 1026 weist ein als Vorsprung wirkendes erstes Zugelement 1046 auf, welches hier kugel- oder stabförmig ausgebildet ist. Das erste Zugelement 1046 ist durch ein Verbindungselement 1052 mit dem festen Teilkoppelmittel 1026 verbunden. Das Verbindungselement 1052 ist dabei beweglich und im Wesentlichen im Inneren des parallelgeführten Teilkoppelmittels 1025 angeordnet. Zur Zentrierung der beiden Zugelemente, kann das parallelgeführte Teilkoppelmittel 1025 auf der dem ersten Zugelement 1046 entgegenliegenden Seite der Durchführung 1053 eine Vertiefung 1054 aufweisen, in welche ein am festen Teilkoppelmittel 1026 ausgebildeter Vorsprung 1055 eingreifen kann.

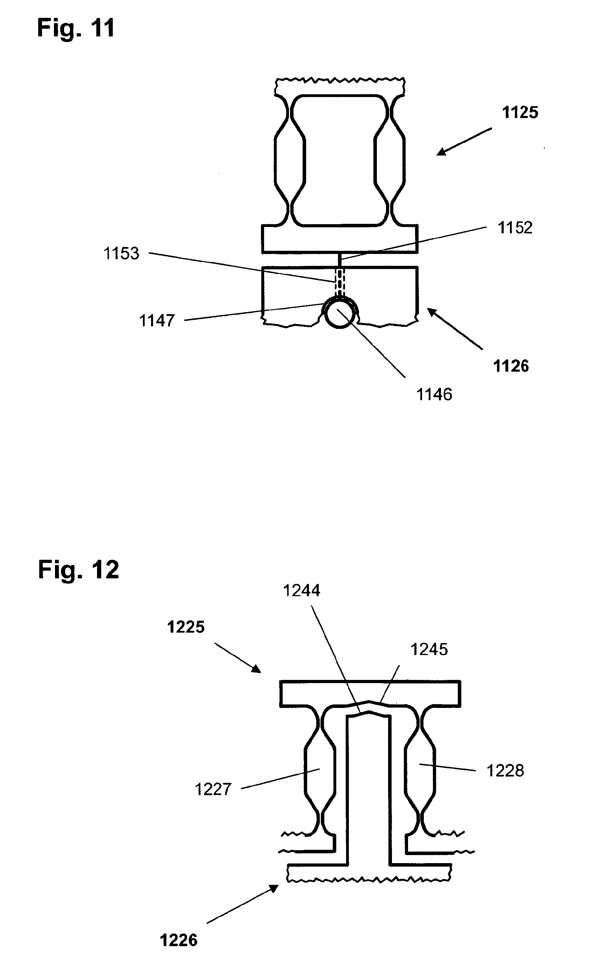

Figur 11 zeigt ein weiteres parallelgeführtes Koppelmittel mit einem festen Teilkoppelmittel 1126 und einem parallelgeführten Teilkoppelmittel 1125, welches ein erstes Zugelement 1146 in Form einer Kugel oder einer Stange aufweist, dass über ein Verbindungsmittel 1152 mit dem parallelgeführten Teilkoppelmittel 1125 verbunden ist. Das feste Teilkoppelmittel 1126 weist eine Durchführung 1153 auf, in welcher das Verbindungselement 1152 zumindest teilweise angeordnet ist, und welche an der dem parallelgeführten Teilkoppelmittel 1125 abgewandten Seite der Durchführung 1153 als Pfanne ausgebildet ist, welche ein zweites Zugelement 1147 darstellt.

Auch die in den Figuren 8 und 9 gezeigten zweiten Zugelemente können zumindest teilweise jeweils in den das erste Zugelement aufweisenden Teilkoppelmitteln angeordnet sein, wie es für die zweiten Zugelemente der Figuren 10 und 11 beschrieben ist.

Figur 12 zeigt ein weiteres parallelgeführtes Koppelmittel mit welchem eine Druckkraft übertragen werden kann. Das parallelgeführte Koppelmittel weist eine festes Teilkoppelmittel 1226 und ein parallelgeführtes Teilkoppelmittel 1225 auf. Das feste Teilkoppelmittel 1226 weist eine Art vorstehenden Stempel auf, an dessen freiem Ende eine Berührungsstelle 1244 ausgebildet ist. Dieser ist zwischen den beiden Parallelelementen 1227, 1228 des parallelgeführten Teilkoppelmittels 1225 angeordnet. Die Berührungsstelle 1244 kann zur Kraftübertragung mit einer am parallelgeführten Teilkoppelmittel 1225 angeordneten Berührungsstelle 1245 in Kontakt gebracht werden kann.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen der Erfindung denkbar, bei welchen beispielsweise mehrere Kalibriergewichte vorhanden sind, welche in der erfindungsgemässen Weise mittels parallelgeführter Koppelmittel unabhängig voneinander in ein Hebelwerk eingekoppelt werden können. Dadurch ist beispielsweise der Wägebereich einer Waage nahezu beliebig erweiterbar. Selbstverständlich sind auch in zwei oder mehrere Segmente vertikal geteilte, parallelgeführte Koppelmittel, Kalibrierungshebel und Kalibriergewichte möglich, die unabhängig voneinander betätigt werden können. Auch sind Ausführungen möglich, bei welchen der Kalibrierungshebel und das Kalibriergewicht monolithisch ausgebildet sind.

Weitere Vorteile der erfindungsgemässen Vorrichtung sind dadurch gegeben, dass mittels der Variierung der Kalibrierungshebelarmlängen unterschiedliche Lastbereiche mit denselben Teilen abdeckbar sind, wenn das Kalibriergewicht entlang des Kalibrierungshebelarms an vom Drehpunkt des Kalibrierungshebels verschieden beabstandeten Stellen montiert werden kann. Gegebenenfalls kann auch eine Justierschraube zwischen dem Kalibriergewicht und dem Kalibrierungshebel angeordnet sein, welche der genauen Einstellung des Abstandes zwischen dem Kalibriergewicht und dem Drehpunkt des Kalibrierungshebels dient. Dadurch ist die Einstellbarkeit der Kalibrierungskraft durch genaues Verschieben des Gewichtes möglich, so dass mehrere Kalibriervorrichtungen trotz durch Fertigungstoleranzen und inhomogener Materialien verursachten Abweichungen dieselbe Kalibrierungskraft aufweisen.

### Bezugszeichenliste

- 500, 400, 300, 200, 100: Wägezelle
- 610, 510, 410, 310, 210, 110: Kraftübertragungsvorrichtung
- 611, 411, 311, 111: feststehender Bereich
- 612, 312, 112: Lastaufnahmebereich
- 113: Gelenkstelle
- 614, 114: erster Parallellenker
- 615, 115: zweiter Parallellenker
- 316,116: Hebel
- 117: kurzer Hebelarm
- 118: langer Hebelarm
- 119: erstes Koppelelement
- 620, 520, 420, 320, 220, 120: Kalibrierungshebel
- 321, 221, 121: erster Kalibrierungshebelarm
- 322, 222, 122: zweiter Kalibrierungshebelarm
- 123: Kalibriergewicht
- 624, 524, 424, 324, 224, 124: parallelgeführtes Koppelmittel
- 1225, 1125, 1025, 925, 825, 725, 625, 225, 125: parallelgeführtes Teilkoppelmittel
- 1226, 1126, 1026, 926, 826, 726, 626, 226, 126: festes Teilkoppelmittel
- 1227, 1027, 927, 827, 727, 127: erstes Parallelelement
- 1228, 1028, 928, 828, 728, 128: zweites Parallelelement
- 529: drittes Koppelelement
- 130: Messaufnehmer
- 131: Spule
- 132: Magnet
- 133: Positionsgeber
- 434: Koppelelement
- 435: Durchbruch
- 636, 536, 436: erster Hebel
- 637, 537, 437: zweiter Hebel
- 538: dritter Hebel
- 539: zweites Koppelelement
- 140: Lastaufnehmer
- 641: Bohrung
- 642: Bohrung
- 1244, 744: erste Berührungsstelle
- 1245, 745: zweite Berührungsstelle
- 1146, 1046, 946, 846: erstes Zugelement
- 1147, 1047, 947, 847: zweites Zugelement
- 849: Pfanne
- 150: Kalibriergewichtsauflegevorrichtung
- 151: Kurvenscheibe
- 1152, 1052: Verbindungselement
- 1053: Durchführung
- 1054: Vertiefung
- 1055: Vorsprung
- 460: Lagerstelle
- 461: Lagerstelle
- 362, 162: Lagerstelle
- 363, 163: Lagerstelle
- 699: Materialblock

## Patentansprüche

1. Kraftübertragungsvorrichtung eines gravimetrischen Messinstruments mit einem feststehenden Bereich (111) und mit einem Lastaufnahmebereich (112), welcher Lastaufnahmebereich (112) direkt oder durch mindestens ein Koppelelement (119) und mindestens einen Hebel (116) kraftübertragend mit einem am feststehenden Bereich (111) angeordneten Messaufnehmer verbunden ist, **dadurch gekennzeichnet, dass** die Kraftübertragungsvorrichtung (110) ein parallelgeführtes Koppelmittel (124) und einen Kalibrierungshebel (120) mit einer Gelenkstelle, einem ersten Kalibrierungshebelarm (121) und einem zweiten Kalibrierungshebelarm (122) aufweist, wobei die Gelenkstelle am feststehenden Bereich (111) abgestützt ist, der erste Kalibrierungshebelarm (121) mit einem Kalibriergewicht (123) fest verbunden ist, wobei zwischen dem zweiten Kalibrierungshebelarm (122) des Kalibrierungshebels (120) und dem mindestens einen Koppelelement (119) oder einem Hebelarm (117, 118) des mindestens einen Hebels (116) das parallelgeführte Koppelmittel (124) angeordnet ist, wobei das parallelgeführte Koppelmittel (124) in ein festes Teilkoppelmittel (126) und in ein parallelgeführtes Teilkoppelmittel (125) zweigeteilt ist, wobei zwischen dem festen und dem parallelgeführten Teilkoppelmittel (125, 126) entweder eine Druck- oder Zugkraft übertragbar ist, und wobei das parallelgeführte Teilkoppelmittel (125) ein erstes und ein zweites Parallelelement (127, 128) aufweist, welche parallel zueinander angeordnet sind und über die das parallelgeführte Teilkoppelmittel (125) entweder am zweiten Kalibrierungsarm (122) oder am Lastaufnahmebereich (112), am mindestens einen Koppelelement (119) oder am Hebelarm (118) festgelegt ist, so dass bei der Kraftübertragung durch das parallelgeführte Koppelmittel (124) auftretende relative Querverschiebungen durch das erste und das zweite Parallelelement (127, 128) ausgeglichen werden.

2. Kraftübertragungsvorrichtung nach Anspruch 1, **dadurch gekennzeichnet, dass** das feste Teilkoppelmittel (726) und das parallelgeführte Teilkoppelmittel (725) zur Übertragung von Druckkräften jeweils eine Berührungsstelle (744, 745) aufweist, welche gegeneinander ausgerichtet sind.

3. Kraftübertragungsvorrichtung nach Anspruch 1, **dadurch gekennzeichnet, dass** eines der beiden Teilkoppelmittel (825, 826) ein erstes Zugelement (846) mit einem Vorsprung aufweist und das andere Teilkoppelmittel (825, 826) ein zweites Zugelement (847) mit einer Pfanne aufweist, wobei das erste Zugelement (846) und das zweite Zugelement (847) ineinander greifen, der Vorsprung zur Pfanne ausgerichtet ist und bei Übertragung von Zugkräften der Vorsprung mit der Pfanne in Anlage ist.

4. Kraftübertragungsvorrichtung nach Anspruch 3, **dadurch gekennzeichnet, dass** das erste Zugelement (1146) zumindest teilweise innerhalb des das zweite Zugelement (1147) aufweisenden Teilkoppelmittels (1126) angeordnet ist.

5. Kraftübertragungsvorrichtung nach einem der Ansprüche 1 bis 4, **dadurch gekennzeichnet, dass** das erste Parallelelement (727) und/oder das zweite Parallelelement (728) mindestens ein Dünnstellenbiegelager aufweist.

6. Kraftübertragungsvorrichtung nach einem der Ansprüche 1 bis 5, **dadurch gekennzeichnet, dass** das parallelgeführte Teilkoppelmittel (325) am zweiten Kalibrierungsarm (322) festgelegt ist.

7. Kraftübertragungsvorrichtung nach einem der Ansprüche 1 bis 6, **dadurch gekennzeichnet, dass** in deren Betriebsstellung der Lastaufnahmebereich (112) mittels mindestens eines oberen Parallellenkers (114) und mittels mindestens eines unteren Parallellenkers (115) am feststehenden (111) Bereich in vertikaler Richtung geführt ist.

8. Kraftübertragungsvorrichtung nach einem der Ansprüche 1 bis 7, **dadurch gekennzeichnet, dass** mindestens der Lastaufnahmebereich (612), der feststehende Bereich (611), der Kalibrierungshebel (620) und das parallelgeführte Koppelmittel (624) zusammen monolithisch ausgebildet sind.

9. Gravimetrisches Messinstrument mit einem Messaufnehmer, mit einem Kalibriergewicht (123) und mit einer Kraftübertragungsvorrichtung (110) nach einem der Ansprüche 1 bis 8.

10. Gravimetrisches Messinstrument nach Anspruch 9, **dadurch gekennzeichnet, dass** die Gewichtskraft des Kalibriergewichts (123) durch die Kraftübertragungsvorrichtung (210) in derselben Richtung wie eine auf den Lastaufnahmebereich (112) wirkende Kraft auf den Messaufnehmer übertragbar ist.

11. Gravimetrisches Messinstrument nach Anspruch 9, **dadurch gekennzeichnet, dass** die Gewichtskraft des Kalibriergewichts (123) durch die Kraftübertragungsvorrichtung (110) in der entgegengesetzten Richtung wie eine auf den Lastaufnahmebereich (112) wirkende Kraft auf den Messaufnehmer übertragbar ist.

12. Gravimetrisches Messinstrument nach einem der Ansprüche 9 bis 11, **dadurch gekennzeichnet, dass** das Kalibriergewicht aus einem korrosionsbeständigen Material der Dichte ρ = 8.0 kg/dm³ gefertigt ist.

13. Gravimetrisches Messinstrument nach einem der Ansprüche 9 bis 12, **dadurch gekennzeichnet, dass** das Kalibriergewicht aus demselben Material wie die Kraftübertragungsvorrichtung gefertigt ist, und dass zur Kompensation des Dichteeinflusses eine Ergänzungsmasse mit dem Kalibriergewicht verbunden ist und/oder ein Drucksensor zur Erfassung des Umgebungsdrucks des gravimetrischen Messinstruments vorhanden ist.

## Claims

1. Force-transmitting mechanism of a gravimetric measuring instrument, comprising
a stationary portion (111) and
a load-receiving portion (112),
wherein the load-receiving portion (112) is joined through a force-transmitting connection, either directly or by way of at least one coupling element (119) and at least one lever (116), to a measurement transducer which is arranged on the stationary portion (111),
**characterized in that** the force-transmitting mechanism (110) comprises
a parallel-guided coupling means (124) and
a calibration lever (120) with a fulcrum, a first calibration lever arm (121) and a second calibration lever arm (122),
wherein the fulcrum is mounted on the stationary portion (111) and the first calibration lever arm (121) is rigidly connected to a calibration weight (123),
wherein the parallel-guided coupling means (124) is arranged between the second calibration lever arm (120) of the calibration lever (12) and the at least one coupling element (119) or a lever arm (117, 118) of the at least one lever (116),
wherein the parallel-guided coupling means (124) is divided into a fixed coupling part (126) and a parallel-guided coupling part (125),
wherein a tractive or a compressive force can be transmitted between the fixed coupling part (126) and the parallel-guided coupling part (125), and
wherein the parallel-guided coupling part (125) comprises a first parallel element (127) and a second parallel element (128) which are arranged parallel to each other and through which the parallel-guided coupling part (125) is tied either to the second calibration lever arm (122) or to the load-receiving portion (112), to the at least one coupling element (119), or to the lever arm (118), so that relative traverse displacements which occur in the transmission of a force through the parallel-guided coupling means (124) are absorbed by the first parallel element (127) and the second parallel element (128).

2. Force-transmitting mechanism according to claim 1, **characterized in that** the fixed coupling part (726) and the parallel-guided coupling part (725) each comprise a contact location (744 and 745, respectively) which are oriented facing each other.

3. Force-transmitting mechanism according to claim 1, **characterized in that** one of the two coupling parts (825, 826) comprises a first traction element (846) with a projection, and the other of the two coupling parts (825, 826) comprises a second traction element (847) with a receiving seat, wherein the first traction element (846) and the second traction element (847) reach into each other, the projection is aligned with the receiving seat and, when tractive forces are transmitted, the projection is bearing against the receiving seat.

4. Force-transmitting mechanism according to claim 3, **characterized in that** the first traction element (1146) is arranged at least partially inside the coupling part (1126) that comprises the second traction element (1147).

5. Force-transmitting mechanism according to one of the claims 1 to 4, **characterized in that** the first parallel element (727) and/or the second parallel element (727) comprises at least one pivot formed by a narrow and flexible material connection.

6. Force-transmitting mechanism according to one of the claims 1 to 5, **characterized in that** the parallel-guided coupling part (325) is connected to the second calibration arm (322).

7. Force-transmitting mechanism according to one of the claims 1 to 6, **characterized in that** the load-receiving portion (112) is constrained to the stationary portion (111) by means of at least one upper parallel-guiding member (114) and at least one lower parallel-guiding member (115) for guided vertical movement in the the operating position of the force-transmitting mechanism.

8. Force-transmitting mechanism according to one of the claims 1 to 7, **characterized in that** at least the load-receiving portion (612), the stationary portion (611), the calibration lever (620) and the parallel-guided coupling means (624) are formed as a monolithic unit.

9. Gravimetric measuring instrument with a measurement transducer, with a calibration weight (123), and with a force-transmitting mechanism (110) according to one of the claims 1 to 8.

10. Gravimetric measuring instrument according to claim 9, **characterized in that** the weight force of the calibration weight (123) can be transmitted so as to act on the measurement transducer in the same direction as a force that is applied to the load-receiving portion (112).

11. Gravimetric measuring instrument according to claim 9, **characterized in that** the weight force of the calibration weight (123) can be transmitted so as to act on the measurement transducer in the opposite direction of a force that is applied to the load-receiving portion (112).

12. Gravimetric measuring instrument according to one of the claims 9 to 11, **characterized in that** the calibration weight is made of a corrosion-resistant material with a density of ρ = 8.0 kg/dm³.

13. Gravimetric measuring instrument according to one of the claims 9 to 12, **characterized in that** the calibration weight is made of the same material as the force-transmitting mechanism and that, to compensate for the effect of density, an auxiliary mass is attached to the calibration weight, and/or a pressure sensor is added for measuring the ambient barometric pressure of the gravimetric measuring instrument.

## Revendications

1. Dispositif de transmission de force d'un instrument de mesure gravimétrique, avec une région fixe (111) et avec une région de réception de charges (112), ladite région de réception de charges (112) étant reliée, directement ou par le biais d'au moins un élément d'accouplement (119) et d'au moins un levier (116), de façon à transmettre des forces, à un capteur de mesure agencé sur la région fixe (111), **caractérisé en ce que** le dispositif de transmission de force (110) comporte un moyen d'accouplement (124) guidé parallèlement et un levier de calibrage (120) avec un point d'articulation, un premier bras de levier de calibrage (121) et un deuxième bras de levier de calibrage (122), dans lequel le point d'articulation s'appuie sur la région fixe (111), le premier bras de levier de calibrage (121) est relié fixement à un poids de calibrage (123), dans lequel le moyen d'accouplement (124) guidé parallèlement est agencé entre le deuxième bras de levier de calibrage (122) du levier de calibrage (120) et l'au moins un élément d'accouplement (119) ou un bras de levier (117, 118) de l'au moins un levier (116), dans lequel le moyen d'accouplement (124) guidé parallèlement est divisé en un moyen d'accouplement partiel fixe (126) et un moyen d'accouplement partiel (125) guidé parallèlement, dans lequel une force de pression ou de traction peut être transmise entre le moyen d'accouplement partiel fixe et le moyen d'accouplement guidé parallèlement (125, 126), et dans lequel le moyen d'accouplement partiel (125) guidé parallèlement comporte un premier et un deuxième élément parallèle (127, 128) agencés parallèlement l'un à l'autre et par le biais desquels le moyen d'accouplement partiel guidé parallèlement (125) est fixé soit au deuxième bras de calibrage (122), soit à la région de réception de charge (112), à l'au moins un élément d'accouplement (119) ou au bras de levier (118), de manière à ce que les déplacements transversaux relatifs apparaissant lors de la transmission de force en raison du moyen d'accouplement guidé parallèlement (124) soient compensés par le premier et le deuxième élément parallèle (127, 128).

2. Dispositif de transmission de force selon la revendication 1, **caractérisé en ce que** le moyen d'accouplement partiel fixe (726) et le moyen d'accouplement partiel guidé parallèlement (725) comportent respectivement un point de contact (744, 745) pour la transmission de forces de pression, lesquels sont orientés l'un vers l'autre.

3. Dispositif de transmission de force selon la revendication 1, **caractérisé en ce que** l'un des deux moyens d'accouplement partiels (825, 826) comporte un premier élément de traction (846) avec une saillie, et l'autre moyen d'accouplement partiel (825, 826) comporte un deuxième élément de traction (847) avec une cuvette, dans lequel le premier élément de traction (846) et le deuxième élément de traction (847) s'engagent l'un dans l'autre, la saillie est orientée vers la cuvette et la saillie est en contact avec la cuvette lors de la transmission de forces de traction.

4. Dispositif de transmission de force selon la revendication 3, **caractérisé en ce que** le premier élément de traction (1146) est agencé au moins partiellement à l'intérieur du moyen d'accouplement partiel (1126) comportant le deuxième élément de traction (1147).

5. Dispositif de transmission de force selon l'une des revendications 1 à 4, **caractérisé en ce que** le premier élément parallèle (727) et/ou le deuxième élément parallèle (728) comporte au moins un palier de fléchissement de partie fine.

6. Dispositif de transmission de force selon l'une des revendications 1 à 5, **caractérisé en ce que** le moyen d'accouplement partiel guidé parallèlement (325) est fixé au deuxième bras de calibrage (322).

7. Dispositif de transmission de force selon l'une des revendications 1 à 6, **caractérisé en ce que** dans la position de fonctionnement, la région de réception de charges (112) est guidée dans la direction verticale sur la région fixe (111), au moyen d'au moins un guide parallèle supérieur (114) et au moyen d'au moins un guide parallèle inférieur (115).

8. Dispositif de transmission de force selon l'une des revendications 1 à 7, **caractérisé en ce qu'**au moins la région de réception de charges (612), la région fixe (611), le levier de calibrage (620) et le moyen d'accouplement guidé parallèlement (624) sont conçus ensemble en un seul bloc.

9. Instrument de mesure gravimétrique avec un capteur de mesure, avec un poids de calibrage (123) et avec un dispositif de transmission de force (110) selon l'une des revendications 1 à 8.

10. Instrument de mesure gravimétrique selon la revendication 9, **caractérisé en ce que** la force de pesanteur du poids de calibrage (123) peut être transmise au capteur de mesure par le dispositif de transmission de force (210), dans la même direction qu'une force agissant sur la région de réception de charges (112).

11. Instrument de mesure gravimétrique selon la revendication 9, **caractérisé en ce que** la force de pesanteur du poids de calibrage (123) peut être transmise au capteur de mesure par le dispositif de transmission de force (110), dans la direction opposée par rapport à une force agissant sur la région de réception de charges (112).

12. Instrument de mesure gravimétrique selon l'une des revendications 9 à 11, **caractérisé en ce que** le poids de calibrage est fabriqué à partie d'un matériau résistant à la corrosion et présentant une densité p = 8,0 kg/dm³.

13. Instrument de mesure gravimétrique selon l'une des revendications 9 à 12, **caractérisé en ce que** le poids de calibrage est fabriqué à partir du même matériau que le dispositif de transmission de force, et **en ce que** pour la compensation de l'influence de la densité, une masse de compensation est reliée au poids de calibrage et/ou un capteur de pression est prévu pour la détection de la pression environnante de l'instrument de mesure gravimétrique.
